# EUROPÄISCHE PATENTANMELDUNG

(11) **EP 1 195 271 A2**
(43) Veröffentlichungstag der Anmeldung: **10.04.2002**
(21) Anmeldenummer: 01123648.6
(22) Anmeldetag: 02.10.2001
(51) Int. Cl.: B60C 11/12, B60C 11/11

(54) **Fahrzeugreifen**

(30) Priorität: 06.10.2000 DE 10049936
(71) Anmelder: Continental Aktiengesellschaft, 30165 Hannover (DE)
(72) Erfinder: Hindriks, Günter, 30453 Hannover (DE); Metz, Markus, 30167 Hannover (DE)

(57) **Zusammenfassung**

Die Erfindung bezieht sich auf einen Fahrzeugreifen, insbesondere einen für den Einsatz unter winterlichen Fahrbedingungen geeigneten PKW-Reifen, mit einem Laufstreifen mit Profilpositiven, wie Profilblöcke oder Laufstreifenbänder, die in der Draufsicht mit einem aus gleichartigen Einzelelementen (1a, 1'a, 1"a) zusammengesetzten Einschnittmuster versehen sind.

Zur Verbesserung der Winterfahreigenschaften, insbesondere was das Traktionsverhalten auf Schnee und das Bremsverhalten auf trockenen Fahrbahnen betrifft, ist das Einschnittmuster in der Draufsicht aus Einzelelementen (1a, 1'a, 1"a) zusammengesetzt, die über Hinterschneidungen bildende Ansätze (3, 3') und gegengleich ausgeführte Ausnehmungen (4, 4') puzzleartig angeordnet sind.

## Beschreibung

Die Erfindung betrifft einen Fahrzeugreifen, insbesondere einen für den Einsatz unter winterlichen Fahrbedingungen geeigneten PKW-Reifen, mit einem Laufstreifen mit Profilpositiven, wie Profilblöcke oder Laufstreifenbänder, die in der Draufsicht mit einem aus gleichartigen Einzelelementen zusammengesetzten Einschnittmuster versehen sind.

Es ist schon seit Langem üblich, für den Einsatz unter winterlichen Fahrbedingungen geeignete Fahrzeugreifen mit Profilpositiven zu versehen, die eine Vielzahl von Einschnitten aufweisen. Bekannt sind dabei auch Ausführungen, wo die Einschnitte innerhalb der Profilpositive ein Einschnittmuster bilden. In diesem Zusammenhang wird beispielsweise auf die **EP-A-0 618 092** verwiesen, die einen Fahrzeugreifen der eingangs genannten Art betrifft, bei dem das Einschnittmuster durch ineinander greifende Doppel-T-Träger-förmige Einzelelemente gebildet wird. Damit sollen gute Griffeigenschaften und eine hohe Biegesteifigkeit der Profilstrukturen des Laufstreifens, und zwar sowohl in Umfangs- als auch in Querrichtung, gewährleistet werden.

Aus der **AT-B402 180** ist es bekannt, Profilpositive mit einem Einschnittnetz zu strukturieren, welches sich insbesondere aus regelmäßigen Sechsecken zusammensetzt, sodass ein wabenförmiges Einschnittmuster entsteht. Damit kann eine sehr gleichmäßige Biegesteifigkeit sowohl bei Beanspruchung in Umfangs- als auch in Querrichtung erzielt werden.

Der Erfindung liegt nun die Aufgabe zugrunde, ein zu den bekannten Einschnittmustern alternativ gestaltetes Einschnittmuster aufzufinden, mit dem bei sehr guten Wintereigenschaften, insbesondere was das Traktionsverhalten auf Schnee betrifft, auch sehr gute Fahreigenschaften auf trockenen Fahrbahnen, insbesondere was das Bremsverhalten betrifft, erzielbar sind.

Gelöst wird die gestellte Aufgabe erfindungsgemäß dadurch, dass das Einschnittmuster in der Draufsicht aus Einzelelementen zusammengesetzt ist, die über Hinterschneidungen bildende Ansätze und gegengleich ausgeführte Ausnehmungen puzzleartig angeordnet sind.

Es hat sich herausgestellt, dass gerade durch ein derart ausgeführtes Einschnittmuster ein Verzahnungseffekt erzielbar ist, der für die ansonsten schwierig zu erreichende gleichzeitige Verbesserung von Wintereigenschaften und von Eigenschaften auf trockenen Fahrbahnen besonders vorteilhaft ist. Es hat sich gezeigt, dass Reifen mit erfindungsgemäß ausgeführten Laufstreifen insbesondere ein verbessertes Traktionsverhalten auf Schneefahrbahnen und ein verbessertes Bremsverhalten auf trockenen Fahrbahnen aufweisen. Erfindungsgemäß ausgeführte Einschnittmuster dürften daher eine Art der Verzahnung innerhalb der Profilpositive zur Folge haben, die, wie es auch von anderen Einschnittmustern bekannt ist, zwar grundsätzlich eine Erhöhung der Steifigkeit dieser Profilpositive bewirkt, aber darüber hinaus gerade auf die erwähnten Eigenschaften besonders günstige Auswirkungen hat.

Gemäß einer bevorzugten Ausführungsform der Erfindung sind die innerhalb eines bestimmten Profilpositivs angeordneten Einzelelemente des Einschnittmusters, mit Ausnahme von Randelementen, zumindest im Wesentlichen in übereinstimmender Form und Größe ausgeführt. Diese Maßnahme unterstützt eine gleichmäßige Biegesteifigkeit des jeweiligen Profilpositivs unter unterschiedlichen und in verschiedenen Richtungen wirkenden Belastungen.

Um einen ungleichförmigen Abrieb, insbesondere eine Sägezahnbildung der Profilpositive im Bereich ihrer Kanten, zu verhindern, ist es von Vorteil, wenn die im Profilpositiv randseitig verlaufenden Einzelelemente wenige oder keine an den Profilpositivkanten mündenden Einschnitte aufweisen.

Je nachdem, welche Reifeneigenschaften, beispielsweise die Griffeigenschaften, die Seitenführung auf winterlichen Fahrbahnen oder das Traktionsverhalten, schwerpunktmäßig beeinflusst werden sollen, werden die Einzelelemente entweder derart im Profilpositiv angeordnet, dass sie zumindest im Wesentlichen parallel zu einer der Profilpositivkanten verlaufen, oder es erfolgt die Anordnung und Ausführung des Einschnittmusters derart, dass die Einzelelemente abweichend zur Ausrichtung der Profilpositivkanten orientiert sind.

Wie bereits erwähnt, ist der mit einem erfindungsgemäß ausgestalteten Einschnittmuster erzielbare Verzahnungseffekt für die Verbesserung bestimmter Eigenschaften verantwortlich. Die diesen Verzahnungseffekt ermöglichenden Hinterschneidungen im Bereich der laschenartigen Ansätze bzw. der zu diesen gegengleich ausgebildeten Ausnehmungen der Einzelelemente, die das Einschnittmuster zusammensetzen, weisen bevorzugte Formen auf. So können beispielsweise die laschenartigen Ansätze bzw. die Ausnehmungen eine Kontur in der Form eines Kreisteiles oder dergleichen oder auch in der Form eines Schwalbenschwanzes aufweisen.

Weitere Merkmale, Vorteile und Einzelheiten der Erfindung werden nun anhand der Zeichnung, die in schematischen Darstellungen Ausführungsbeispiele der Erfindung enthält, beschrieben. Dabei zeigen
Fig. 1, Fig. 2 und Fig. 3 jeweils eine Draufsicht auf einen Profilblock mit verschiedenen Ausführungsformen der Erfindung und
Fig. 4 eine Draufsicht auf eine Teilabwicklung eines erfindungsgemäß ausgeführten Laufstreifens eines Fahrzeugreifens.

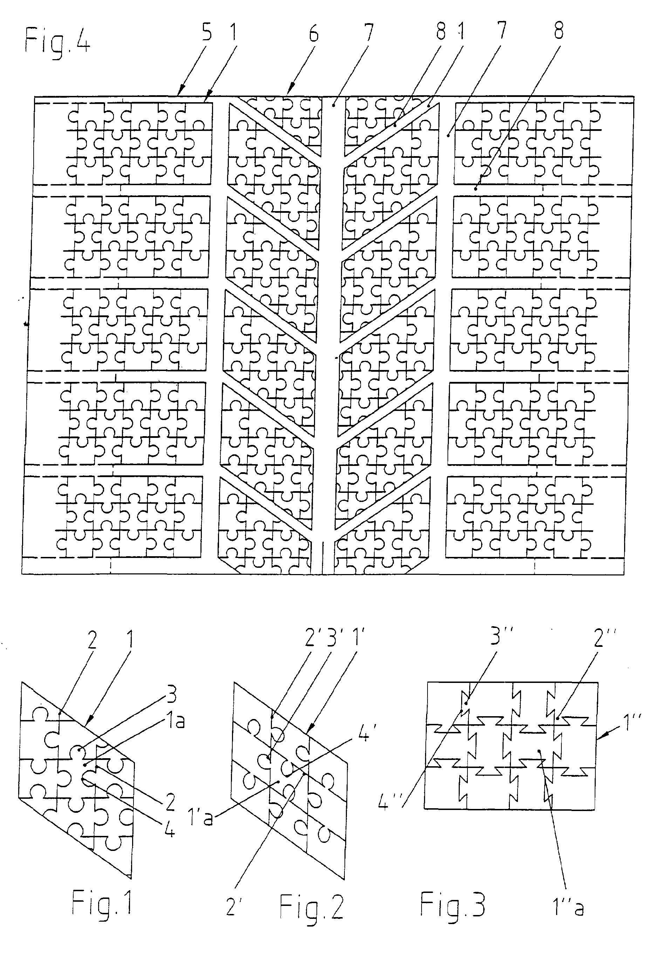

**Fig. 1, Fig. 2** und **Fig. 3** zeigen jeweils schematisch die Draufsicht auf einen Profilblock 1, 1', 1", der parallelogrammförmig gestaltet ist. Die für einen Laufstreifen gewählte tatsächliche Blockform kann von der vereinfachten Darstellung der Fig. 1 bis 3 abweichen, indem beispielsweise an den Eckbereichen Abschrägungen vorgesehen sind oder Profilblockkanten nicht exakt parallel zueinander verlaufen. Die in diesen Zeichnungsfiguren zueinander parallel verlaufenden kürzeren Profilblockkanten sind dabei beispielsweise jene, die in der Umfangsrichtung des Laufstreifens ausgerichtet sind, die beiden längeren und ebenfalls zueinander parallel verlaufenden Profilblockkanten sind in Fig. 1 und Fig. 2 unter einem spitzen Winkel zur Querrichtung und in Fig. 3 in Querrichtung orientiert. Die Profilblöcke 1, 1', 1" sind ferner, wie es auch Fig. 4 zeigt, zumindest zum Teil von Nuten umgeben.

Die Erfindung besteht in der besonderen Ausführung des Einschnittmusters in den Profilblöcken 1, 1', 1". Einschnitte 2, 2', 2" überziehen bzw. durchsetzen die Profilblöcke 1, 1', 1" derart, dass ein Einschnittmuster aus Einzelelementen 1a, 1'a, 1"a entsteht, die puzzleartig zusammengefügt sind. Wie Fig. 1 bis 3 zeigen, weisen die zur Gänze innerhalb eines Profilblocks 1, 1', 1" liegenden Einzelelemente 1a, 1'a, 1"a eine von Einschnitten 2, 2', 2" gebildete Außenkontur auf, die grundsätzlich rechteckförmig (Fig. 1 und Fig. 3) oder parallelogrammförmig (Fig. 2) ist, wobei jeweils an zwei der einander gegenüberliegenden Seiten je ein laschenförmiger Ansatz 3, 3', 3", und an den beiden weiteren gegenüberliegenden Seiten je eine Ausnehmung 4, 4', 4" gebildet sind. Jeder laschenförmige Ansatz 3, 3', 3" ist mit einer gegengleich ausgebildeten Ausnehmung 4, 4', 4" zusammengefügt. Die entlang der Profilblockkanten vorgesehenen Randelemente können, wie es etwa Fig. 2 zeigt, außenseitig unstrukturiert sein und somit von einschnittfreien Profilblockkanten begrenzt sein. Es kann jedoch auch, wie es in Fig. 1 gezeigt ist, vorgesehen werden, dass in zumindest einigen der randseitig verlaufenden Einzelelemente 1a das Einschnittmuster fortgesetzt ist.

Bei dem in Fig. 1 gezeigten Einschnittmuster weisen die Einzelelemente 1a eine grundsätzliche Orientierung in der Querrichtung und in der vertikalen Richtung auf, was einer Orientierung in der Querrichtung bzw. der Umfangsrichtung des Laufstreifens entspricht. Bei den Ausführungsformen gemäß Fig. 2 und 3 sind die Puzzleteilen nachempfundenen Einzelelemente 1'a 1"a, bezüglich ihrer Orientierung der Parallelogrammform bzw. der Rechteckform des Profilblocks 1', 1" angepasst.

Die von den Einschnitten 2, 2', 2" gebildeten Ausnehmungen 4, 4', 4" und die laschenartigen Ansätze 3, 3', 3" können unterschiedlich ausgeführt sein. Für die Erfindung ist jedoch von Bedeutung, dass die laschenartigen Ansätze 3, 3', 3" Hinterschneidungen bilden. Bei den in Fig. 1 und Fig. 2 gezeigten Ausführungsvarianten ist jeweils die Kontur der laschenartigen Ansätze 3, 3', 3" und der Ausnehmungen 4, 4', 4" fast ein voller Kreis. Fig. 3 zeigt eine Ausführungsform, bei der die Ansätze 3" und die Ausnehmungen 4" schwalbenschwanzförmig gestaltet sind. Die laschenartigen Ansätze und die korrespondierend ausgebildeten Ausnehmungen können selbstverständlich auch andere Konturformen aufweisen, beispielsweise kuppelförmig oder dergleichen.

Die Größe der Einzelelemente 1a, 1'a, 1"a, der laschenartigen Ansätze 3, 3', 3" und der Ausnehmungen 4, 4', 4" sowie die für diese gewählten Konturen richten sich danach, in welchem Ausmaß auf bestimmte Laufstreifeneigenschaften Einfluss genommen werden soll und auch danach, in welchem Laufstreifenbereich, ob im Mittelbereich oder in den Schulterbereichen, erfindungsgemäß ausgeführte Profilstrukturen vorgesehen werden. Es können daher beispielsweise die Einzelelemente 1a, 1'a, 1"a innerhalb eines Profilblocks oder eines größeren Profilbereichs sämtlich gleichartig und zumindest im Wesentlichen gleich groß ausgeführt sein. Alternativ dazu können unterschiedliche Formen und Größen innerhalb eines Profilblocks oder eines Profilbereichs miteinander kombiniert werden. Es hat sich jedenfalls gezeigt, dass erfindungsgemäß ausgeführte Einschnittmuster einen Verzahnungseffekt zur Folge haben, mit dem sich besonders die Traktion auf Schnee und das Bremsverhaltens auf trockenen Fahrbahnen verbessern lassen.

Die ein erfindungsgemäßes Einschnittmuster bildenden Einschnitte 2, 2', 2" werden in den für Einschnitte üblichen Breiten von ca. 0,4 bis 0, 6 mm ausgeführt und können eine Tiefe aufweisen, die bis auf die Dessintiefe des Profils der Laufstreifen reicht. Die Tiefe der Einschnitte 2, 2', 2" in einem erfindungsgemäßen Einschnittmuster kann variieren, um die Steifigkeit des Profilblockes 1, 1', 1" auf bestimmte Weise zu beeinflussen.

**Fig. 4** zeigt eine Ausführungsform eines Laufstreifens mit Profilpositiven mit erfindungsgemäßen Einschnittmustern. Der dargestellte Laufstreifen ist für PKW-Reifen vorgesehen und besitzt ein sogenanntes gepfeilt bzw. drehrichtungsgebunden ausgeführtes Profil und weist zwei Schulterblockreihen 5 und zwei mittlere Blockreihen 6, die voneinander jeweils durch breite Umfangsnuten 7 getrennt sind, auf. Der gepfeilte Verlauf wird durch den Verlauf von Quernuten 8 bestimmt. Die in den Blockreihen 5, 6 verlaufenden Profilblöcke 1 weisen ein Einschnittmuster auf, das grundsätzlich jenem gemäß Fig. 1 entspricht. In den der zentralen Umfangsnut 7 benachbarten Profilblöcken 1 ist ferner das Einschnittmuster so ausgeführt, dass, der Umfangsnut 7 benachbart kleinere Einzelelemente, etwa halb so groß wie die anderen, ausgebildet sind.

Die Erfindung ist auf die dargestellten Ausführungsbeispiele nicht eingeschränkt. So ist es beispielsweise möglich, erfindungsgemäß ausgeführte Einschnittmuster auch in in Umfangsrichtung kontinuierlich umlaufenden Laufstreifenbändern, die beispielsweise durch Sacknuten strukturiert sein können, vorzusehen. Es muss ferner nicht der gesamte Laufstreifen, wie es etwa beim Ausführungsbeispiel gemäß Fig. 4 der Fall ist, Profilpositive mit erfindungsgemäßen Einschnittmustern aufweisen, diese können auch mit Profilstrukturen kombiniert werden, die abweichend gestaltete Einschnittmuster oder auch keine Einschnitte aufweisen.

## Patentansprüche

1. Fahrzeugreifen, insbesondere ein für den Einsatz unter winterlichen Fahrbedingungen geeigneter PKW-Reifen, mit einem Laufstreifen mit Profilpositiven, wie Profilblöcke oder Laufstreifenbänder, die in der Draufsicht mit einem aus gleichartigen Einzelelementen zusammengesetzten Einschnittmuster versehen sind,
**dadurch gekennzeichnet,**
**dass** das Einschnittmuster in der Draufsicht aus Einzelelementen (1a, 1'a, 1"a) zusammengesetzt ist, die über Hinterschneidungen bildende Ansätze (3, 3') und gegengleich ausgeführte Ausnehmungen (4, 4') puzzleartig angeordnet sind.

2. Fahrzeugreifen nach Anspruch 1, **dadurch gekennzeichnet, dass** innerhalb eines bestimmten Profilpositivs die Einzelelemente (1a, 1'a, 1"a), gegebenenfalls mit Ausnahme von Randelementen, zumindest im Wesentlichen in übereinstimmender Form und Größe ausgeführt sind.

3. Fahrzeugreifen nach Anspruch 1 oder 2, **dadurch gekennzeichnet, dass** im Profilpositiv die randseitig verlaufenden Einzelelemente (1a, 1'a, 1"a) wenige oder keine an den Profilpositivkanten mündenden Einschnitte (2, 2', 2") aufweisen.

4. Fahrzeugreifen nach einem der Ansprüche 1 bis 3, **dadurch gekennzeichnet, dass** die Einzelelemente (1'a, 1"a) dem Verlauf zumindest einer der Profilpositivkanten folgend ausgerichtet sind.

5. Fahrzeugreifen nach einem der Ansprüche 1 bis 4, **dadurch gekennzeichnet, dass** die Einzelelemente (1a) abweichend zur Ausrichtung der Profilpositivkanten orientiert sind.

6. Fahrzeugreifen nach einem der Ansprüche 1 bis 5, **dadurch gekennzeichnet, dass** die laschenartigen Ansätze (3, 3') und die gegengleich ausgeführten Ausnehmungen (4, 4') zumindest im Wesentlichen eine einem Teil eines Kreises folgende oder ähnliche Kontur aufweisen.

7. Fahrzeugreifen nach einem der Ansprüche 1 bis 5, **dadurch gekennzeichnet, dass** die laschenartigen Ansätze (3") und die gegengleich ausgeführten Ausnehmungen (4") schwalbenschwanzförmig ausgeführt sind.
